# EUROPÄISCHE PATENTANMELDUNG

(11) **EP 0 970 645 A2**
(43) Veröffentlichungstag der Anmeldung: **12.01.2000**
(21) Anmeldenummer: 99106408.0
(22) Anmeldetag: 27.03.1999
(51) Int. Cl.: A47G 29/10, A47G 25/06

(54) **Hakenleiste**

(30) Priorität: 25.06.1998 DE 19828125
(71) Anmelder: Erwin Paulat Kunststoff- und Metallwaren GmbH, 76770 Hatzenbühl (DE)
(72) Erfinder: Paulat, Thomas, 76770 Hatzenbühl (DE)
(74) Vertreter: Petersen, Frank, Dipl.-Ing.

(57) **Zusammenfassung**

Die Erfindung betrifft eine Hakenleiste zum Anhängen von Schlüsseln mit einem Grundkörper, der eine Mehrzahl von Haken trägt. Erfindungsgemäß wird vorgeschlagen, die Haken als Hakenrohlinge (2) aus Kunststoff zu fertigen, diese mit Zapfen (7) in entsprechende Lochungen am Grundkörper (1) einzuführen und in dieser Stellung mittels Ultraschall formschlüssig zu vernieten.

## Beschreibung

Die Erfindung betrifft eine Hakenleiste, insbesondere zum Anhängen von Schlüsseln, mit einem Grundkörper, der eine Mehrzahl von Haken trägt.

Außer den hier beispielhaft angeführten Schlüsseln können auch andere Bedarfsgüter des täglichen Lebens an entsprechenden Hakenleisten aufgehängt werden.

Es sind Hakenleisten verschiedener Arten bekannt: Zum einen gibt es aus Blech ausgestanzte Leisten, bei denen die Haken herausgebogen werden. Die Bearbeitung solcher Leisten erfolgt in mehreren Schritten und der Herstellungsprozeß, bei dem das Werkstück entgratet, entfettet, phosphatiert und anschließend entweder galvanisiert oder pulverbeschichtet wird, ist sehr aufwendig. Ist bei derartigen Hakenleisten beabsichtigt, eine Beschriftung der Haken zu ermöglichen, so müssen separate Befestigungshinterschneidungen an der Leiste ausgeformt werden, in die dann entsprechende Papier- und Folienstreifen eingesteckt werden können.

Desweiteren sind Metallschienen bekannt, bei denen aus Kunststoff gespritzte Haken von oben aufgeschoben werden. Auch dies ist sehr aufwendig, da einerseits die Metallschiene herzustellen und nachzubearbeiten ist und außerdem noch die Montage des Kunststoffhakens vorgenommen werden muß. Eine Beschriftungsmöglichkeit der Haken ist bei dieser vorbekannten Ausführungsform über eine entsprechende Beschriftungsnut am Haken gelöst.

Weiterhin sind noch Hakenleisten bekannt, die entweder aus Kunststoff oder Metall bestehen und die in Trageschienen eingesetzt, eingeschnappt oder auf ähnliche Weise befestigt werden, die aber alle einen hohen Montageaufwand haben.

Dies ist auch der Nachteil von vorbekannten profilierten Metall- oder extrudierten Kunststoffleisten, bei denen entsprechende Haken seitlich eingeschoben werden. Diese Bestückung der Leisten mit den seitlich einzuschiebenden Haken ist entsprechend arbeitsaufwendig. Dies erfordert meist auch einen erhöhten Materialeinsatz.

Dann gibt es noch spritzgegossene Hakenleisten, die aber den Nachteil von sehr teuren Werkzeugen haben. Für jede unterschiedliche Leistenlänge ist ein separates Spritzwerkzeug notwendig und außerdem sind für entsprechende Hinterschneidungen in den Haken oder an Beschriftungsnuten aufwendige und teure Kernzugwerkzeuge erforderlich. Ein 2-farbiges Produktdesign würde mit der hier notwendigen Verwendung von Drehwerkzeugen beim 2-Farben-Spritzgießen einen zusätzlichen Mehraufwand bedeuten.

Aufgabe der vorliegenden Erfindung ist es daher, eine Hakenleiste anzugeben, die mit möglichst geringem technischen Aufwand herzustellen ist. Zusätzlich sollen die Hakenleisten in beliebigen Längen hergestellt werden können, ohne daß Veränderungen an der Geometrie der Leiste notwendig sind.

Diese Aufgabe wird erfindungsgemäß gelöst, indem der Grundkörper der Hakenleiste ein extrudiertes Profil aus Kunststoff ist, das mit einer Mehrzahl von Lochungen versehen ist, in die Hakenrohlinge aus Kunststoff eingesteckt sind und mittels Ultraschall formschlüssig vernietet sind.

Der Vorteil der Erfindung liegt darin, daß Hakenleisten beliebiger Länge hergestellt werden können, dies ist lediglich von der Länge des verwandten Grundkörpers abhängig.

Außerdem lassen sich so Haken verschiedener Formen oder aber auch verschiedener Farben an einer Hakenleiste beliebig kombinieren. Damit ergeben sich weitere Designvorteile.

Die zu verwendenden Hakenrohlinge haben vorteilhafterweise einen angeformten Bund, der vor der Lochung zu liegen kommt. Dieser Bund dient als Auflagefläche beim Verschweißen.

Es ist im übrigen günstig, wenn die Lochung im extrudierten Kunststoffprofil nicht voll symmetrisch ist und der in der Lochung liegende Abschnitt des Hakenrohlings eine entsprechende Kontur aufweist, da so sicherzustellen ist, daß die an dem Profil zu befestigenden Haken positionsgenau ausgerichtet sind, bevor sie vernietet werden.

Weitere Vorteile und Merkmale der Erfindung ergeben sich aus der nachfolgenden Beschreibung der Zeichnung. Dabei zeigt
- Figur 1: einen Hakenrohling vor der Ultraschallverschweißung;
- Figur 2: einen Hakenrohling bei der Ultraschallverschweißung und
- Figur 3: einen Hakenrohling nach der Ultraschallverschweißung.

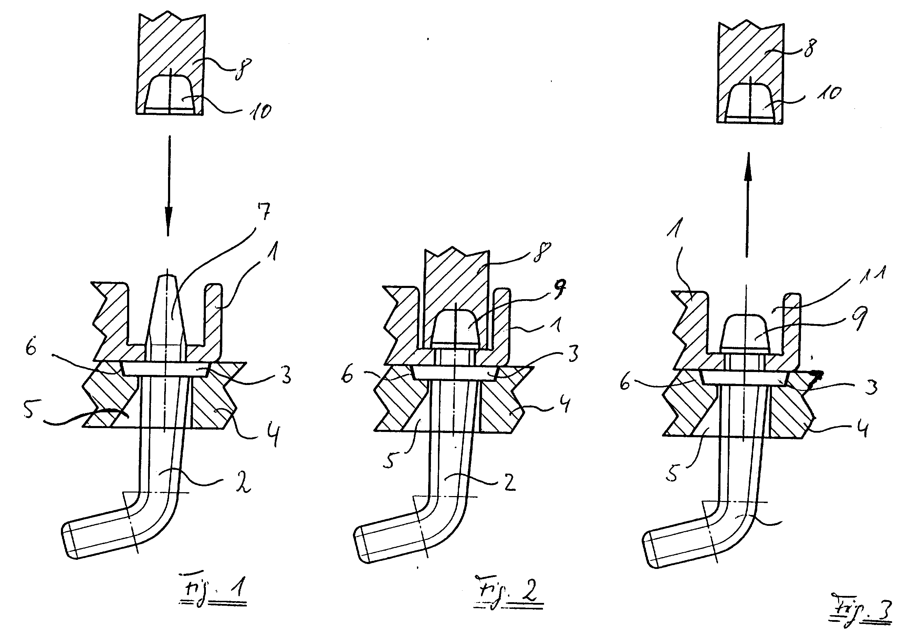

In den Figuren 1 bis 3 sind die verschiedenen Phasen der Anbringung eines Kunststoffhakens an eine Profilleiste mittels Ultraschallschweißen dargestellt. Was hier nicht gezeigt wird, was aber in dem Patent Nr. 197 04 239.2 beschrieben ist, ist die Herstellung einer extrudierten Profilschiene 1, die in beliebigen Längen herzustellen ist. Diese Profilschiene wird abgelängt und es werden in sie Löcher hineingestanzt.

Unabhängig davon werden Hakenrohlinge 2 im Spritzgußverfahren aus Kunststoff hergestellt. Diese Hakenrohlinge weisen im hier dargestellten Beispiel einen Bund 3 auf. Die vorgefertigen Hakenrohlinge 2 werden dann in Ausnehmungen 5 einer Auflage 4 eingesteckt, die einen Abschnitt 6 hat, der mit dem Bund 3 des Hakenrohlings korrespondiert.

Damit steht von der Auflage 4 ein sich an den Bund 3 am Hakenrohling anschließender Zapfen 7 vor, auf den die Profilschiene 1 mit ihren erwähnten Lochungen aufgesteckt wird. Indem dabei die Lochung und der Zapfen 7 eine nicht voll symmetrische Querschnittsform haben, richtet sich der Hakenrohling 2 in eine vorgegebene Position aus.

Auf den Zapfen 7 wird dann eine Sonotrode 8 heruntergefahren, die im Ultraschallverfahren den Zapfen 7 verflüssigt, der dabei die in der Sonotrode eingebrachte Kavität 10 ausfüllt und somit einen Linsenkopf 9 bildet, der in seiner Form der Kavität 10 entspricht. Die Sonotrode 8 wird dann wieder von dem Linsenkopf entfernt, der vollständig innerhalb einer Aussparung 11 auf der Rückseite der Profilschiene 1 liegt, so daß er bei Anbringung der sich ergebenden Hakenleiste an einer flachen Wand nicht stört. Der Linsenkopf 9 fixiert, indem er die Lochung in der Hakenleiste 1 vollständig überdeckt und seitlich übergreift, den Haken an dem extrudierten Profil.

Die Hakenleiste wird dann von der Auflage 4 heruntergenommen und kann verwendet werden.

Insgesamt stellt die Erfindung somit eine Möglichkeit dar, auf relativ einfache Weise Hakenleisten herzustellen. Es soll in diesem Zusammenhang nur noch darauf hingewiesen werden, daß die Hakenrohlinge unterschiedliche Farben haben können, so daß hier eine gewisse Variabilität möglich ist und beispielsweise in Zusammenhang mit farbigen Schlüsselanhängern eine einfacher Zuordnung von aufzuhängendem Schlüssel und Haken erreichbar ist.

## Patentansprüche

1. Hakenleiste, insbesondere zum Anhängen von Schlüsseln und anderen Bedarfsgütern, mit einem Grundkörper, der eine Mehrzahl von Haken trägt.
dadurch gekennzeichnet,
daß der Grundkörper ein extrudiertes Profil (1) aus Kunststoff ist, das mit einer Mehrzahl von Lochungen versehen ist, in die Hakenrohlinge (2) aus Kunststoff eingesteckt sind und mittels Ultraschall formschlüssig vernietet sind.

2. Hakenleiste gemäß Anspruch 1,
dadurch gekennzeichnet,
daß die Hakenrohlinge (2) einen angeformten Bund (3) aufweisen, der vor die Lochung zu liegen kommt.

3. Hakenleiste gemäß Anspruch 1,
dadurch gekennzeichnet,
daß die Lochung nicht voll symmetrisch ist und der in der Lochung liegende Abschnitt des Hakenrohlings (2) eine entsprechende Kontur aufweist.

4. Hakenleiste gemäß Anspruch 1,
dadurch gekennzeichnet,
daß mehrere Hakenrohlinge unterschiedlicher Farben und/oder Formen an dem Grundkörper befestigt sind.
